# DEMANDE DE BREVET EUROPEEN

(11) **EP 2 256 852 A1**
(43) Date de publication de la demande: **01.12.2010**
(21) Numéro de dépôt: 09161304.2
(22) Date de dépôt: 27.05.2009
(51) Int. Cl.: H01M 8/04

(54) **Système de dérivation des cellules d'une pile à combustible**

(71) Demandeur: Belenos Clean Power Holding AG, 2502 Bienne (CH)
(72) Inventeur: Toth, Antoine, 2800, Delémont (CH)
(74) Mandataire: Ravenel, Thierry Gérard Louis

(57) **Abrégé**

La présente invention concerne un système de dérivation (10) d'une pile de blocs (3) électrochimiques reliés en série. Le système comprend des circuits de dérivation (27) connectés chacun entre un pôle positif et un pôle négatif d'un bloc électrochimique. Le système (10) comprend également un circuit de commande (11) prévu pour envoyer un signal de commande à au moins un des circuits de dérivation pour lui faire shunter le bloc électrochimique entre les pôles duquel il est connecté. Le système de contrôle est **caractérisé en ce qu**'il comporte des modules de contrôle (12) ayant chacun sa propre référence de tension, en ce que chacun des circuits de dérivation appartient à l'un des modules. Chaque module de contrôle comprend plusieurs circuits de dérivation et les circuits de dérivations appartenant à un module de contrôle étant connectés entre les pôles de blocs électrochimiques contigus, de sorte que les modules de contrôle subdivisent la pile en plusieurs groupes (13) de blocs électrochimiques. Le système se caractérise également en ce que chaque module de contrôle comprend des moyens de communications (23) avec le circuit de commande, de sorte que le circuit de commande peut commander les circuits de dérivation appartenant à des modules de contrôle différents.

## Description

La présente invention concerne un système de dérivation d'une pile de blocs électrochimiques reliés en série. Le système comprend des circuits de dérivation connectés chacun entre un pôle positif et un pôle négatif d'un bloc électrochimique. Le système comprend également un circuit de commande prévu pour envoyer un signal de commande à au moins un des circuits de dérivation pour lui faire shunter le bloc électrochimique entre les pôles duquel il est connecté.

### ARRIERE PLAN TECHNOLOGIQUE

On connaît des assemblages de blocs électrochimiques reliés en série (souvent appelés piles). Les blocs électrochimiques ainsi assemblés peuvent être constitués par exemple par des éléments d'accumulateur, ou encore par des cellules à combustible. Une cellule à combustible est un dispositif électrochimique prévu pour convertir une énergie chimique directement en énergie électrique. Par exemple, un type de cellule à combustible inclus une anode et une cathode entre lesquelles est arrangée une membrane à échange de proton souvent appelée membrane électrolyte polymère. Ce type de membrane permet de ne laisser passer que les protons entre l'anode et la cathode de la cellule à combustible. Au niveau de l'anode, de l'hydrogène diatomique subit une réaction afin de produire des ions H⁺ qui vont passer à travers la membrane électrolyte polymère. Les électrons produits par cette réaction rejoignent la cathode par un circuit externe à la cellule à combustible, produisant ainsi un courant électrique.

Du fait qu'une seule cellule à combustible ne produit, en général, qu'une faible tension (environ 1 Volt), on assemble souvent les cellules à combustibles en série de manière à constituer des piles de cellules à combustible capables de produire une tension plus élevée qui est l'addition des tensions de chaque cellule. Un inconvénient des piles à combustible est qu'il ne suffit pas de les débrancher pour les arrêter. En effet, si le courant fourni en sortie par une pile à combustible est soudainement réduit à zéro, les cellules à combustible qui constituent la pile ne parviennent plus à éliminer l'énergie électrochimique qu'elles produisent, et la tension aux bornes des différentes cellules risque de s'élever au point d'entraîner une dégradation accélérée de la membrane polymère et des catalyseurs qui lui sont associés. Il ne suffit pas non plus de couper l'alimentation en carburant et en comburant pour stopper une pile à combustible. Dans ce cas, en effet, la quantité de carburant et de comburant enfermée à l'intérieur de la pile suffit à entretenir la réaction pendant un temps considérable. Dans le cas d'une pile à combustible utilisant l'hydrogène comme carburant et l'oxygène pur comme comburant, la pile peut même prendre plusieurs heures pour s'arrêter.

Le document de brevet US 2008/0038595 décrit un procédé pour arrêter une pile à combustible. Ce procédé de l'art antérieur débute à la réception d'un signal de commande d'arrêt. La première étape du procédé consiste à couper l'arrivée d'oxygène. La deuxième étape du procédé consiste à débiter un courant soutenu de manière à consommer la majeure partie de l'oxygène présent dans la pile. La troisième étape consiste à introduire de l'air dans les conduits d'oxygène et, enfin, la dernière étape consiste à couper l'arrivée d'hydrogène. L'expérience a montré que, durant le fonctionnement d'une pile à combustible, les différentes cellules ne se comportent pas toutes exactement de la même manière. En particulier, elles ne délivrent pas toutes la même tension et ne dégagent pas non plus toutes la même quantité de chaleur. Ainsi, durant la deuxième étape du procédé d'arrêt ci-dessus, il est avantageux d'ajuster individuellement l'intensité des courants débités à partir de chaque cellule de la pile.

On connaît déjà des systèmes pour dériver le courant traversant certaines cellules d'une pile à combustible. De tels systèmes sont utilisés afin d'arrêter une pile à combustible ou pour isoler une cellule défectueuse.

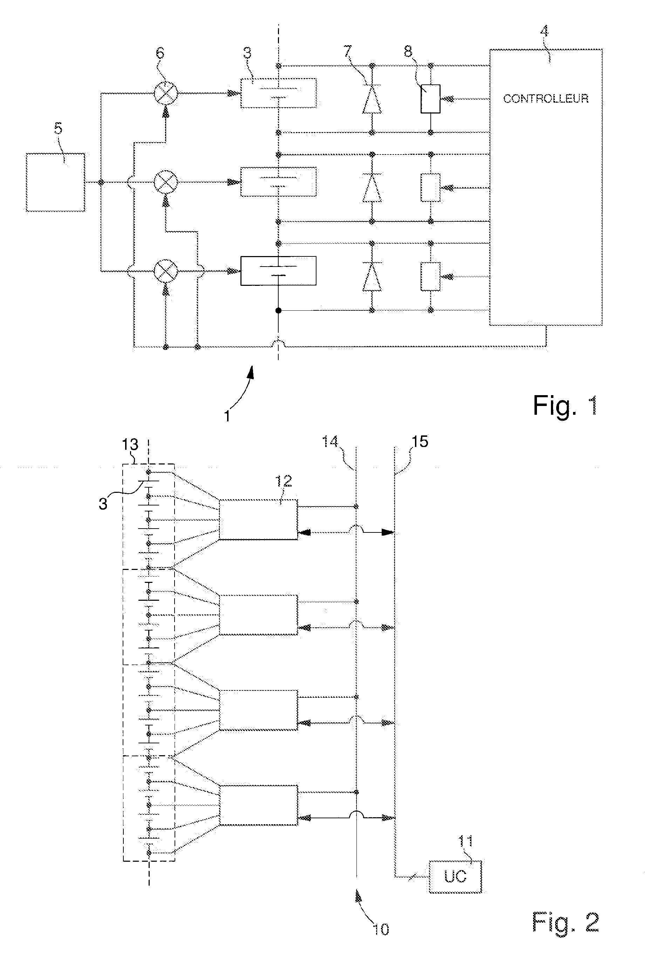

Un système connu utilise un réseau de diodes et de vannes comme représenté sur la figure 1. Chaque cellule comprend une diode et une vanne d'alimentation en gaz. Cette diode et cette vanne sont pilotées électroniquement par une unité de calcul. Lorsque l'unité de calcul reçoit un signal de commande d'arrêt, elle court-circuite les cellules via la diode de chaque cellule. En même temps, l'unité de calcul coupe la ou les vannes d'alimentation en gaz de la ou des cellules concernées afin de stopper le processus.

Les systèmes connus pour dériver le courant traversant certaines cellules d'une pile à combustible présente certains inconvénients. En particulier, certaines piles à combustible comprennent plus de cent cellules reliées en série. Or, selon la puissance raccordée et le plus ou moins bon état d'une cellule, la tension d'une cellule individuelle peut fluctuer entre 0 et 1,2 volts environ. Ainsi, dans le cas d'une pile, la différence de potentiel entre certaines cellules et la masse peut s'élever à plusieurs dizaines, voir même centaines, de volts. Malheureusement, les dispositifs à semi-conducteurs ordinaires utilisés normalement pour commander la dérivation du courant ne supportent pas des tensions élevées (supérieures à 12, voire 18 volts) entre leurs entrées et la masse.

### RESUME DE L'INVENTION

Un but de la présente invention est de fournir un système de dérivation dans lequel les composants semi-conducteurs utilisés pour commander la dérivation du courant ne sont pas soumis à des tensions excessives.

A cet effet, l'invention a pour objet un système de dérivation de blocs électrochimiques reliés en série, le système comprenant :
- des circuits de dérivation connectés chacun entre un pôle positif et un pôle négatif d'un bloc électrochimique, et
- un circuit de commande prévu pour envoyer un signal de commande à au moins un des circuits de dérivation pour lui faire shunter le bloc électrochimique entre les pôles duquel il est connecté,
- le système de dérivation étant **caractérisé en ce qu**'il comporte des modules de contrôle ayant chacun sa propre référence de tension, en ce que chacun des circuits de dérivation appartient à l'un des modules de contrôle, chaque module de contrôle comprenant plusieurs circuits de dérivation et les circuits de dérivations appartenant à un module étant connectés entre les pôles de blocs électrochimiques contigus, de sorte que les modules de contrôle subdivisent la pile en plusieurs séries de blocs électrochimiques, et en ce que chaque module de contrôle comprend des moyens de communication avec le circuit de commande, de sorte que le circuit de commande peut commander les circuits de dérivation appartenant à des modules de contrôle différents.

La division des blocs électrochimiques en plusieurs séries associées chacune à un module de contrôle permet de limiter la différence de potentielle entre les blocs d'une même série. De plus, chaque module de contrôle ayant sa propre référence de tension, la différence de potentiel entre les différents blocs d'une même série et la référence de tension du module de contrôle associé à cette série peut être maintenue dans une gamme compatible avec les dispositifs semi-conducteurs ordinaires.

Selon une variante avantageuse de la présente invention, les circuits de dérivation du système sont chacun associés à un moyen de mesure de tension pour mesurer la différence de potentiel entre les pôles du bloc électrochimique auxquels le circuit de dérivation est connecté. De plus, chaque module de contrôle comporte une unité de traitement agencée pour recevoir des signaux du circuit de commande. Enfin, lesdits circuits de dérivation ont une impédance variable qui est commandée par ladite unité de commande en fonction des signaux reçus du circuit de commande, ainsi que de la différence de potentiel entre les pôles des blocs auxquels les circuits de dérivations sont respectivement associés.

Comme, selon cette variante, l'impédance d'un circuit de dérivation donné dépend notamment de la différence de potentiel entre les pôles du bloc auquel le circuit de dérivation est associé, cette variante présente l'avantage de permettre de mieux tenir compte du fait que, comme on l'a vu plus haut, durant le fonctionnement d'une pile à combustible, les différentes cellules ne se comportent pas toutes exactement de la même manière. Des modes de réalisation avantageux du système de dérivation de blocs électrochimiques reliés en série de la présente invention font l'objet des revendications dépendantes 3 à 15.

Un des avantages de ces modes de réalisation est de permettre d'arrêter une pile de blocs électrochimiques de façon progressive et sure. En effet, .en diminuant progressivement la différence de potentiel aux bornes des cellules grâce à une impédance variable équipant chaque cellule, le système selon la présente invention permet à tout le gaz contenu dans les cellules d'être consommé. Cela empêche alors les résidus de gaz dans les cellules qui risqueraient d'endommager le système.

### BREVE DESCRIPTION DES FIGURES

Les buts, avantages et caractéristiques du système de contrôle d'une pile de blocs électrochimiques apparaitront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique le système de dérivation de cellule selon l'art antérieur
- la figure 2 représente de manière schématique le système de contrôle d'une pile de blocs électrochimiques selon la présente invention ; et
- la figure 3 représente de manière schématique un module de contrôle du système selon la présente invention.
- la figure 4 représente de manière schématique le système de dérivation selon la présente invention

### DESCRIPTION DETAILLEE

Dans la description suivante, toutes les parties d'une pile à combustible connues d'un homme du métier dans ce domaine technique ne seront expliquées que de manière simplifiée.

Sur la figure 2, on a représenté de manière schématique un système de dérivation 10 conforme à la présente invention associé à une pile à combustible. Cette dernière comprend une multitude de blocs électrochimiques 3 possédant chacun un pôle négatif et un pôle positif servant de points de connexion. Dans le présent exemple, chaque bloc 3 peut être constitué d'une seule cellule à combustible ou de plusieurs cellules à combustible contiguës. Toutefois, pour simplifier, dans la suite de la description on parlera indifféremment de bloc ou de cellule même s'il est possible qu'un bloc soit en fait formé de deux cellules ou plus. Les blocs 3 sont reliés en série pour former ce qu'on appelle communément une pile à combustible. Chaque cellule fournit une tension dont la valeur atteint environ 1.2 Volt ce qui, pour un exemple d'une quarantaine de cellules montées en série, donne une tension totale d'environ 48 Volts.

Les blocs 3 sont regroupés pour former des groupes ou séries 13 de plusieurs blocs. Chaque groupe 13 comprend de préférence le même nombre de blocs 3, et dans le présent exemple chaque groupe comporte quatre blocs. Chaque groupe 13 de blocs 3 est couplé à un module 12. Chaque module 12 est prévu pour communiquer avec une unité de commande centrale 11 gérant l'ensemble des modules via un bus de communication 15. Chaque module 12 est alimenté via un bus d'alimentation 14. Ce bus d'alimentation 14 consiste en un circuit d'alimentation distinct qui n'est pas dépendant de la tension fournie par la pile à combustible. Cela permet aux modules 12 de toujours fonctionner même si la pile à combustible est éteinte.

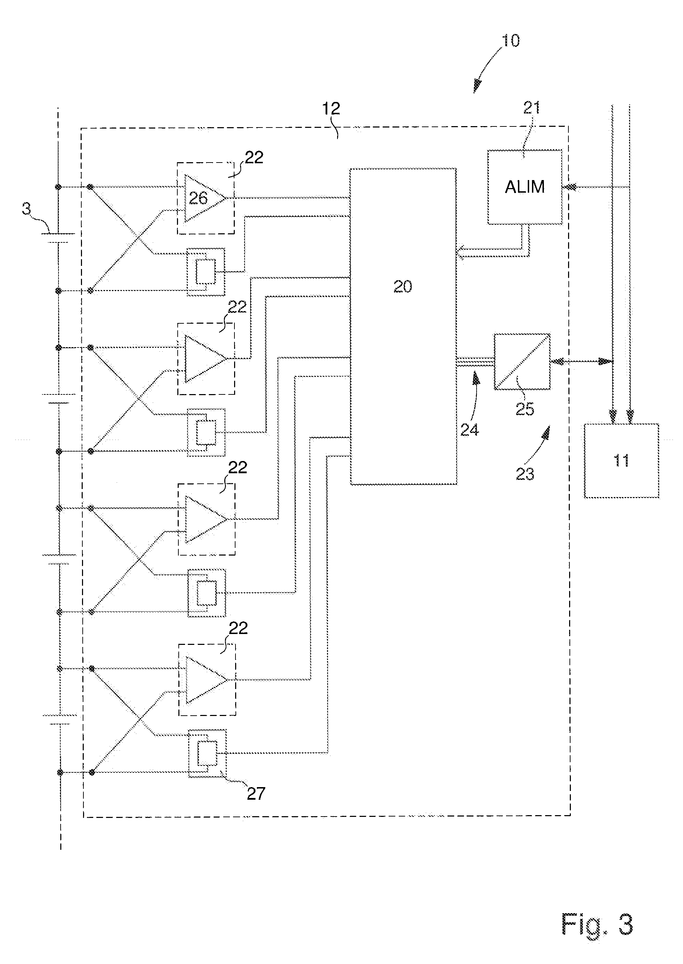

La figure 3 est un schéma plus détaillé d'un module 12 faisant partie d'un système de dérivation selon un mode de réalisation particulier de la présente invention. Chaque module de contrôle 12 comprend une alimentation électrique propre 21 qui reçoit sont énergie du bus d'alimentation 15 tout en en étant séparée galvaniquement. Grâce à cette caractéristique, chaque module 12 peut avoir sa propre tension de référence. Dans le présent exemple, l'isolation galvanique est assurée par un transformateur d'isolation dont le primaire est relié au bus d'alimentation et dont le secondaire fait partie de l'alimentation 21. Dans le présent exemple, l'alimentation 21 fournit aux éléments du module 12 une tension positive +2.5V et une tension négative -2.5V relativement à la tension de référence du module. L'homme du métier comprendra qu'au lieu d'être couplée inductivement au bus d'alimentation 15, l'alimentation 21 pourrait alternativement être couplée capacitivement à ce bus d'alimentation.

Chaque module 12 comprend également une unité de calcul 20 qui dans le présent exemple est implémentée sous la forme d'un microprocesseur. Cette unité de calcul 20 gère ledit module 12 tout en étant elle-même asservie à l'unité de commande centrale 11. L'unité de calcul 20 est alimentée par ladite alimentation du module 12. Elle communique avec l'unité de commande centrale 11 via un système de communication 23. Ce système de communication 23 permet à l'unité de commande centrale 11 d'envoyer des instructions à l'unité de calcul 20 de chaque module 12. Il permet également à chaque unité de calcul d'envoyer à l'unité de commande centrale des informations sur l'état des cellules associées à son module. Dans le présent exemple, le système de communication 23 comprend un bus de transfert 24 relié au bus de communication 15 via des opto-coupleurs 25. Ces derniers permettent de découpler galvaniquement le module 12 du reste du système. Le nombre d'opto-coupleurs 25 est alors fonction du type de protocole de communication, ainsi un bus SPI de l'exemple décrit comprend 3 fils distincts. Chaque fil du bus comprend donc son opto-coupleur 25. Bien entendu, le protocole de communication n'est pas limité à un bus SPI et l'utilisation de tout autre protocole, tel que par exemple le protocole I²C, est envisageable.

On voit sur la figure 3 que l'unité de calcul 20 est reliée aux quatre blocs électrochimique 3 du groupe 13 via quatre circuits de mesure 22. Dans le présent exemple, les circuits de mesure 22 sont chacun constitués par un amplificateur différentiel 26 associé à un bloc 3, comme représenté à la figure 3. Ces amplificateurs différentiels 26 fonctionnent avec les tensions fournies par l'alimentation 21. Les amplificateurs 26 ont deux entrées respectivement reliées au pôle positif et au pôle négatif des différents blocs 3 comme représenté à la figure 3. Les amplificateurs différentiels 26 sont agencés pour former des montages soustracteurs permettant chacun de mesurer la différence de potentiel entre la cathode et l'anode d'un bloc 3. Dans le présent exemple où chaque groupe 13 comprend quatre blocs 4, il y a donc quatre amplificateurs différentiels 26, soit un par bloc 3.

Comme on l'a déjà dit, conformément à la présente invention, chaque module 12 est rendu indépendant par le fait qu'il possède sa propre référence de tension. Pour cela, la masse de chaque module 12 est reliée à l'une des bornes de connexion de l'un des blocs 3 du groupe 13 qui lui est associé. On comprendra que grâce à cette caractéristique, la différence de potentiel entre les entrées d'un amplificateur différentiel 26 et sa masse ne dépasse pas quelques volts.

De façon préférentielle, le point de connexion servant de référence est pris au milieu de la série de blocs formant le groupe 13. Dans le présent exemple, où les groupes comportent quatre blocs, la tension de référence est donc prise entre le deuxième et le troisième bloc. On comprendra de plus que le nombre maximum de blocs par module dépend de la différence de potentiel maximale tolérée par un amplificateur différentiel 26 entre sa masse et l'une de ses entrées. Ainsi dans le cas où la différence de potentiel maximale tolérée est de 8V et où chaque bloc 3 produit au maximum 1.2V, le nombre maximal de bloc 3 est de 12 (6 X 1.2V. = 7.2V. ; 7.2V. < 8V.).

L'amplificateur différentiel 26 est prévu pour fournir en sortie une tension représentative de la différence de potentiel entre les pôles du bloc 3. L'unité de calcul 20 reçoit sur quatre entrées distinctes les tensions fournies par les quatre amplificateurs différentielles 26 du module 12. Dans le présent exemple, l'unité de calcul 20 est de type numérique et non analogique. Dans ces conditions, les signaux reçus en entrée par l'unité de calcul 20 sont tout d'abord numérisés, et les valeurs numérisées des tensions des différentes cellules 3 sont ensuite envoyées à l'unité de commande centrale 11 via les moyens de communication 23.

L'avantage du principe d'avoir plusieurs amplificateurs 26 par groupe 13 de blocs 3 est d'avoir une rapidité dans la réalisation de la mesure. En effet, il devient alors possible de numériser plusieurs différences de potentiel en même temps. Cette synchronisation des numérisations est améliorée dans le cas où l'unité de calcul 20 comprend un nombre de convertisseurs analogique/numérique égal au nombre d'amplificateurs différentiels 26. Or, étant donné que les blocs 3 sont divisés en groupe 13, chaque groupe 13 effectue les mesures des différences de potentiel en même temps, c'est-à-dire de façon parallèle. Il est donc possible que l'ensemble des mesures de différence de potentiel des blocs 3 soit extraites et numérisées en même temps.

Par contre, dans le cas où l'unité de calcul 20 ne comprend qu'un seul convertisseur analogique/numérique, l'extraction de toutes les différences de potentiel est réalisée en même temps mais la conversion en une valeur numérique des différentes mesures n'est pas réalisée simultanément mais séquentiellement. L'unité de calcul 20 sélectionne alternativement chaque différence de potentiel venant de chaque amplificateur différentiel 26 avec décalage d'environ 20µs. Ainsi, l'intégralité des différences de potentiel 26 d'un groupe 13 de quatre blocs 3 est effectuée en approximativement 80µs. Néanmoins, la division des blocs électrochimique 3 en groupe 13 permet de limiter ces effets. Cela permet théoriquement de réaliser l'intégralité des mesures des différences de potentiel de l'ensemble des blocs 3 en approximativement 80 µs.

Comme on l'a déjà dit, une fois les valeurs des différences de potentiel misent sous forme numériques, ces valeurs sont envoyées vers l'unité de commande 11. Cet envoie de données est réalisé de façon sérielle via le système de communications 23 et le bus de communication 14, c'est-à-dire bloc 3 par bloc 3, les unes à la suite des autres. Ces données sont alors utilisées par l'unité de commande pour gérer la pile à combustible 10.

Un des aspects de la gestion d'une pile à combustible est sa mise à l'arrêt. Pour cela, la pile à combustible 10 comprend des circuits de dérivation afin d'éteindre individuellement chaque bloc 3 en abaissant la différence de potentiel à ses bornes. Cette différence de potentiel est abaissée jusqu'à une valeur proche de zéro et maintenue à cette valeur afin d'éteindre le bloc sans l'endommager. Ces circuits de dérivation peuvent également être employés en cas d'urgence pour isoler un bloc 3 de la pile à combustible 10.

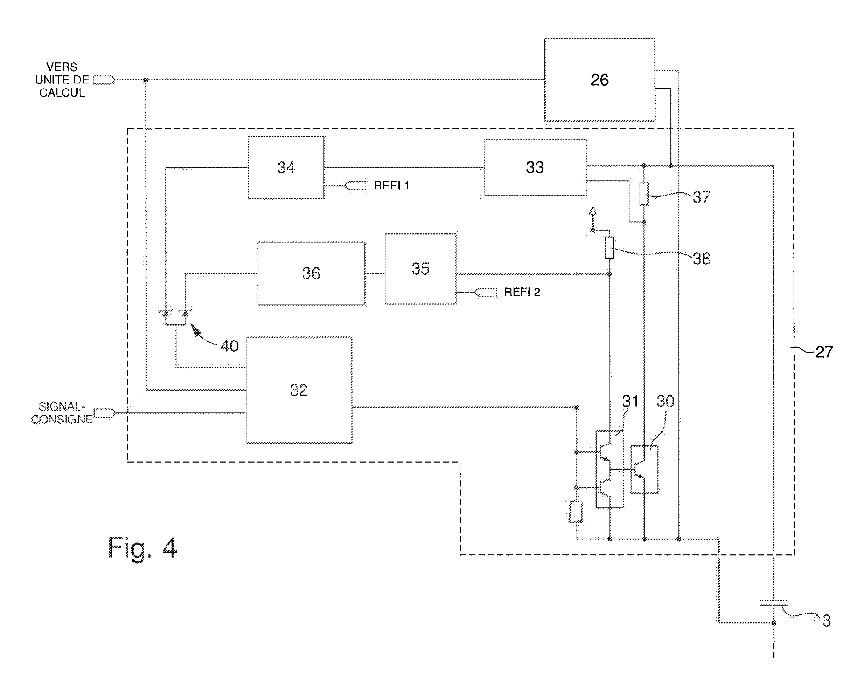

Ces circuits de dérivation sont référencés 27 sur la figure 3, et un mode de réalisation exemplaire de ces circuits de dérivation est représentés schématiquement à la figure 4. En se référant maintenant à la figure 4, on voit que le circuit de dérivation représenté comprend tout d'abord un transistor bipolaire NPN (ou PNP selon la polarisation) référencé 30 qui est connecté entre le pôle positif et le pôle négatif de la cellule 3 en série avec une résistance 37. La base du transistor bipolaire 30 est reliée au point de connexion entre une paire de transistors 31 reliés en série et de polarisation différente. On voit encore sur la figure 4 que les transistors de la paire 31 sont eux-mêmes reliés par leur base à un générateur de contrôle constitué par un sommateur 32 qui comporte une première entrée agencée pour recevoir un signal de consigne venant de l'unité de calcul 20 (figure 3). Le sommateur 32 comporte une deuxième entrée qui est reliée à la sortie à l'amplificateur 26 du circuit de mesure de tension 22. Le sommateur 32 comporte encore une troisième entrée reliée à la fois à la sortie d'un comparateur 34 et à celle d'un inverseur 36. Le circuit comparateur 34 comporte une première entrée qui est reliée à la sortie d'un amplificateur différentiel 33 et une seconde entrée qui est agencée pour recevoir une tension de consigne prédéfinie. L'amplificateur différentiel 33 a deux entrées respectivement reliées aux bornes de la résistance 37 en série avec le transistor bipolaire 30. Outre l'entrée du comparateur 34, la sortie de l'amplificateur différentiel 33 est également reliée à une entrée de l'unité de calcul 20 (figure 3). L'entrée de l'inverseur 36 est reliée à la sortie d'un deuxième comparateur 35. Le comparateur 35 est relié par une première entrée à une des bornes d'une résistance 30 connectée en série avec la paire de transistors 31. L'autre entrée du comparateur 35 est agencée pour recevoir une seconde tension de consigne prédéfinie.

Le circuit de dérivation du présent exemple fonctionne sur le principe de la charge active. La tension appliquée sur la base du transistor NPN 30 permet de faire varier son courant de collecteur. Cette variation du courant et de la tension engendre une variation de l'impédance qui est utilisée dans la présente invention pour contrôler la quantité de courant qui passe dans la dérivation. Le transistor NPN 30 est piloté par l'ensemble formé par la paire de transistors 31 alimentés par une tension +2.5V. Ces deux transistors servent d'intermédiaire entre le transistor NPN servant de charge active et le générateur de contrôle 32. Comme on l'a déjà dit, le générateur de contrôle 32 est un montage à amplificateur différentiel du type sommateur. Ce montage sommateur réalise une somme de trois signaux. Un de ces signaux est la consigne générée par l'unité de calcul 20. Cette consigne peut être un signal du type en modulation de largeur d'impulsions ou du type linéaire.

Le second signal entrant dans le montage sommateur 32 est la mesure de la différence de potentiel du bloc 3 auquel le système à charge active 27 et l'amplificateur différentiel 26 sont connectés. Cette utilisation de la tension mesurée permet de réguler l'extinction du système de contrôle d'une pile de blocs 3 électrochimiques.

Le troisième signal entrant dans le sommateur 32 est un signal de sécurité. En effet, l'utilisation d'un système à charge active pour abaisser la valeur d'une différence de potentiel entraîne une variation du courant. Or, la variation de courant dans un élément résistif entraîne une variation de l'effet joule et donc de la chaleur produite.

Pour cela, le système de dérivation comprend un système limiteur de courant agissant sur le signal de consigne fourni par l'unité de calcul pour limiter le courant traversant la charge active. Ce système limiteur de courant comprend deux modules de surveillance du courant. Un premier module de surveillance est utilisé pour surveiller le courant de dérivation et un second module de surveillance est utilisé pour surveiller le courant traversant la paire de transistors 31 en série pilotant la charge active.

Le premier module comprend la résistance 37 montée en série avec le transistor NPN 30. Cette résistance est utilisée dans un circuit de mesure de courant 33. En effet, le circuit de mesure de courant 33 utilise une résistance externe afin de mesurer le courant dans cette résistance. Cette valeur de courant est ensuite transformée en une valeur de différence de potentiel représentative du courant, qui sera envoyée en sortie. Cette différence de potentiel représentative du courant est alors envoyée vers le circuit comparateur 34 à amplificateur différentiel à fonction intégrateur. Ce circuit comparateur utilise une tension de consigne prédéfinie correspondant au courant à ne pas dépasser. Si la tension représentative du courant est inférieure à cette tension de consigne, le circuit comparateur 34 ne conduit pas et inversement si la tension représentative du courant est supérieure à cette tension de consigne, le circuit comparateur 34 conduit. En cas de conduction, le circuit 34 à fonction intégrateur fait son action. La fonction intégrateur, est alors utilisée pour ralentir le système, c'est-à-dire empêcher de trop fortes variations du signal représentatif du courant servant à corriger le signal de consigne venant de l'unité de calcul. La fonction intégratrice est utilisée pour lisser la tension de correction et par conséquent le signal de consigne.

Le second module est utilisé pour surveiller le courant traversant les deux transistors en série 31 pilotant la charge active. Ce module comprend un montage comparateur 35 à amplificateur différentiel intégrateur. Ce montage comprend une résistance 38 montée en série des deux transistors 31 pilotant le transistor NPN 30 de la charge active, entre l'alimentation 2.5V et le collecteur du premier des deux transistors 31. Aux entrées de l'amplificateur différentiel 35, sont connectées la tension représentative du courant traversant la résistance 38 montée en série avec les deux transistors de commande et la seconde tension de consigne prédéfinie. Si la tension représentative du courant est inférieure à cette tension de consigne, le circuit comparateur ne conduit pas et inversement si la tension représentative du courant est supérieure à cette tension de consigne, le circuit comparateur conduit. En cas de conduction, le signal résultant est alors envoyé dans un montage inverseur 36 afin de permettre la prise en compte de ce signal pour le pilotage de la charge active. Ce second module apporte une protection supplémentaire et n'est donc pas indispensable.

Les signaux sortant des premier et second modules sont ensuite additionnés et envoyés au sommateur 32 pour servir à la régulation. On peut prévoir avantageusement la présence de diodes 40 comme par exemple des diodes schottky en sortie du premier et du second module de surveillance. Ces diodes schottky 40 sont montées en inverse et sont utilisées afin d'empêcher le signal de sortie de chaque module de perturber l'autre module. Ainsi, il n'y a pas de remontée de tension à travers les deux modules.

Dans une première variante, il peut être prévu que des capteurs de température soient installés pour augmenter la protection du système. Ces capteurs de température peuvent se trouver sur la plaque comprenant les divers composants des différents circuits présentés ici mais aussi sur les blocs. En effet, la mesure de la température des blocs 3 voir de chaque cellule permet d'établir des protocoles d'arrêt de la pile à combustible 10. Les capteurs de températures de chaque bloc 3 peuvent être reliés aux unités de calcul associés auxdits blocs 3. Ainsi, comme chaque unité de contrôle gère son propre bloc, il est plus simple que chaque unité de calcul 20 récupère directement les données de température pour agir le plus vite possible. Cette réaction peut être l'arrêt du bloc 3 en question ou bien l'arrêt général du système.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées. Par exemple, le système de dérivation selon la présente invention peut être appliqué à un système de batterie comprenant une multitude de cellule électrochimique.

## Revendications

1. Système de dérivation (10) d'une pile de blocs (3) électrochimiques reliés en série, le système comprenant :
- des circuits de dérivation (27) connectés chacun entre un pôle positif et un pôle négatif d'un bloc électrochimique, et
- un circuit de commande (11) prévu pour envoyer un signal de commande à au moins un des circuits de dérivation pour lui faire shunter le bloc électrochimique entre les pôles duquel il est connecté,
le système de contrôle étant **caractérisé en ce qu'**il comporte des modules de contrôle (12) ayant chacun sa propre référence de tension, **en ce que** chacun des circuits de dérivation appartient à l'un des modules, chaque module de contrôle comprenant plusieurs circuits de dérivation et les circuits de dérivations appartenant à un module de contrôle (12) étant connectés entre les pôles de blocs (3) électrochimiques contigus, de sorte que les modules de contrôle subdivisent la pile en plusieurs groupes (13) de blocs électrochimiques, et **en ce que** chaque module de contrôle comprend des moyens de communications (23) avec le circuit de commande, de sorte que le circuit de commande peut commander les circuits de dérivation appartenant à des modules de contrôle différents.

2. Système selon la revendication 1, **caractérisé en ce que** les circuits de dérivation sont chacun associés à un moyen de mesure (22) de tension pour mesurer la différence de potentiel entre les pôles du bloc (3) électrochimique auxquels le circuit de dérivation est connecté, **en ce que** chaque module de contrôle (12) comporte une unité de calcul (20) agencée pour recevoir des signaux du circuit de commande, et **en ce que** lesdits moyens de dérivation ont une impédance variable qui est commandée par ladite unité de commande (11) en fonction des signaux reçus du circuit de commande, ainsi que de la différence de potentiel entre les pôles des blocs auxquels ces moyens de dérivations sont respectivement associés.

3. Système selon la revendication 2, **caractérisé en ce que** les circuits de dérivations comportent chacun un dispositif de mesure de l'intensité du courant (34, 35) dans la dérivation, et **en ce que** l'unité de commande tient compte de l'intensité du courant pour commander l'impédance du circuit de dérivation.

4. Système selon l'une des revendications 1 à 3, **caractérisé en ce que** les circuits de dérivations comprennent au moins un transistor (30) connecté entre les bornes de chaque bloc.

5. Système selon l'une des revendications 2 à 4, **caractérisé en ce que** les moyens de mesure (22) sont reliées à l'unité de calcul afin de convertir la différence de potentiel extraite en une valeur numérique.

6. Système selon la revendication 5, **caractérisé en ce que** les moyens de communication comprennent des moyens d'isolation galvanique (25).

7. Système selon l'une des revendications précédentes, **caractérisé en ce que** les moyens de mesures (22) une pluralité d'amplificateurs différentielles (26) prévus pour être connectés chacun par deux entrées aux deux bornes d'un bloc électrochimique afin de fournir en sortie une tension représentative de la différence de potentiel présente entre les bornes dudit bloc électrochimique.

8. Système selon la revendication 9, **caractérisé en ce que** ledit au moins un amplificateur différentiel (26) mesure la différence de tension entre les bornes de deux cellules électrochimiques.

9. Système selon l'une des revendications précédentes, **caractérisé en ce que** chaque module de contrôle (12) comprend en outre son propre système l'alimentation (21) afin de pourvoir fonctionner même si le système de contrôle d'une pile de blocs (3) électrochimiques ne fonctionne pas.

10. Système selon l'une des revendications précédentes, **caractérisé en ce que** les amplificateurs différentiels (26) ont une tension maximale d'entrée et **en ce que** dans chaque groupe (13) de blocs électrochimiques, l'addition des différences de potentiel des différents blocs n'excède pas cette tension maximale.

11. Système selon l'une des revendications précédentes, **caractérisé en ce que** chaque groupe (13) de blocs électrochimiques comprend quatre blocs électrochimiques.

12. Système selon la revendication 11, **caractérisé en ce que** chaque bloc électrochimique comprend une cellule à combustible.

13. Système selon la revendication 11, **caractérisé en ce que** chaque bloc électrochimique comprend deux cellules à combustible.

14. Système selon les revendications 1 à 10, **caractérisé en ce que** chaque groupe (13) de blocs électrochimiques comprend huit blocs électrochimiques.

15. Système selon la revendication 14, **caractérisé en ce que** chaque bloc électrochimique comprend une cellule à combustible.
